# FASCICULE DE BREVET EUROPEEN

(11) **EP 2 028 083 B1**
(45) Date de publication et mention de la délivrance du brevet: **15.06.2011**
(21) Numéro de dépôt: 08305433.8
(22) Date de dépôt: 30.07.2008
(51) Int. Cl.: B62D 25/20, B60K 15/067

(54) **Plancher de véhicule automobile**
Boden eines Kraftfahrzeugs
Automobile floor pan

(30) Priorité: 21.08.2007 FR 0757110
(43) Date de publication de la demande: 25.02.2009
(73) Titulaire: Peugeot Citroën Automobiles Société Anonyme, 78140 Velizy Villacoublay (FR)
(72) Inventeur: Hureaux, Sébastien, 70200, Magny D'Anigon (FR)

(56) Documents cités:
- GB-A- 2 404 639
- US-A- 4 759 459

## Description

La présente invention concerne un plancher de véhicule automobile, du type comprenant une partie munie d'un orifice d'accès à un orifice d'ouverture d'un réservoir de carburant disposé au-dessous du plancher.

Un example de cette technique antérieure est divulgué par le document GB 2 404 639.

La partie arrière d'un véhicule automobile doit satisfaire à certaines prestations liées aux contraintes lors d'un choc arrière.

Ces prestations sont notamment de deux ordres, une première prestation dite choc réparabilité arrière et une seconde prestation dite choc haute vitesse.

Pour les chocs réparabilité arrière, c'est-à-dire à une faible vitesse de l'ordre de 16 km/h, il est admis que des éléments de la structure puissent se déformer et être réparés, alors que d'autres, comme par exemple le plancher arrière et les longerons arrière, ne doivent pas subir de déformation.

Pour les chocs haute vitesse, les éléments déformés de la partie arrière doivent pouvoir être réparés en service après vente.

Or, des risques de déformation existent au niveau de la surface de contact entre le plancher et le réservoir de carburant.

Plus particulièrement, lors d'un choc arrière subi par le véhicule, le plancher se déforme en créant des cloques autour de l'orifice d'accès et ces déformations peuvent entraîner des fuites de carburant, voire des risques d'incendie sur le véhicule et ses occupants.

L'invention a pour but d'améliorer la sécurité du véhicule et la protection des passagers lors d'un choc arrière en réduisant les risques de déformation du plancher au niveau de l'orifice d'accès ménagé dans ce plancher.

A cet effet, l'invention a pour objet un plancher de véhicule automobile du type précité, caractérisé en ce qu'il comporte en périphérie de l'orifice d'accès une déformation locale de rigidification de ladite partie.

Le plancher selon l'invention peut comporter une ou plusieurs des caractéristiques suivantes :
- la déformation locale comporte au moins une nervure de forme adaptée pour rigidifier ladite partie ;
- ladite nervure s'étend sensiblement parallèlement à l'axe longitudinal du véhicule ;
- il est réalisé à partir d'une tôle emboutie, ladite nervure étant formée lors de l'emboutissage du plancher par un contre-emboutissage ; et
- ladite nervure présente une profondeur comprise entre 7 mm et 11 mm, de préférence sensiblement égale à 9 mm.

L'invention a également pour objet un véhicule automobile, caractérisé en ce qu'il comprend un plancher tel que décrit précédemment.

L'invention sera mieux comprise à la lecture de la description qui va suivre, donnée uniquement à titre d'exemple et faite en se référant aux dessins annexés, sur lesquels :
- la figure 1 est une vue de côté d'une partie d'un véhicule automobile comprenant un plancher selon l'invention ;
- la figure 2 est une vue de dessus du plancher de la figure 1 ; et
- la figure 3 est une vue en coupe verticale transversale suivant la ligne III-III de la figure 2.

Afin de simplifier la description qui va suivre, les figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

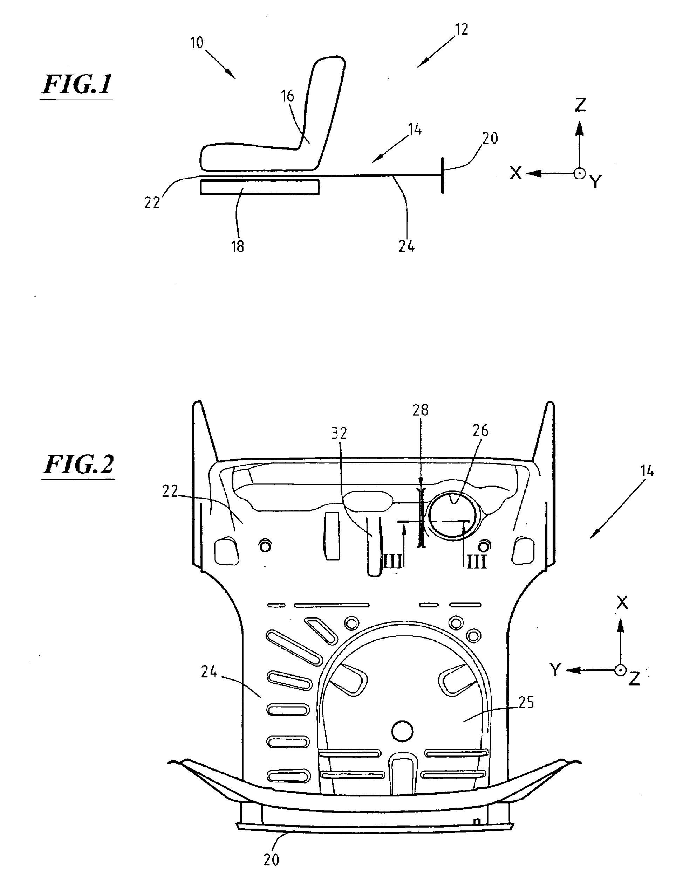

La figure 1 illustre, de façon simplifiée, la partie arrière 10 d'un véhicule automobile 12.

La partie arrière 10 comporte, entre autres, un plancher arrière 14, une rangée de sièges arrière 16, un réservoir de carburant 18 et un pare-chocs arrière 20.

Le plancher 14 s'étend sensiblement dans un plan horizontal et comporte une première partie 22 disposée entre les assises de la rangée de sièges arrière 16 et le réservoir de carburant 18, et une seconde partie 24 prolongeant vers l'arrière ladite première partie 22 et reliée au pare-chocs 20. Cette seconde partie 24 forme un fond d'un compartiment de coffre, non représenté, et comporte, dans l'exemple de réalisation représenté à la figure 2, un logement 25 pour une roue de secours.

Comme on le voit mieux sur la figure 2, la première partie 22 du plancher 14 est munie d'un orifice d'accès 26 à un orifice d'ouverture, non représenté, du réservoir de carburant 18 disposé au-dessous du plancher 14.

L'orifice d'accès 26, communément appelé "puits de jauge carburant", permet d'accéder au réservoir de carburant 18 lorsqu'une vidange de ce dernier est souhaitée.

Le plancher 14 comporte en périphérie de l'orifice d'accès 26 une déformation locale 28 de rigidification de la première partie 22.

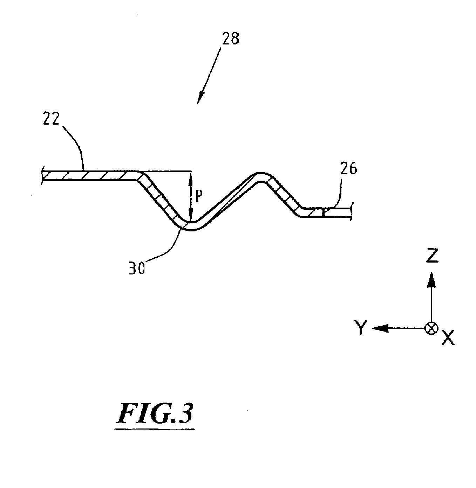

En référence à la figure 3, la déformation locale 28 comporte une nervure 30 de forme adaptée pour rigidifier la première partie 22.

La nervure 30 s'étend sensiblement parallèlement à l'axe longitudinal X du véhicule 12.

Le plancher 14 est réalisé à partir d'une tôle emboutie, la nervure 30 étant formée lors de l'emboutissage du plancher 14 par un contre-emboutissage.

Ce contre-embouti formant la nervure 30 est ainsi disposé entre l'orifice d'accès 26 et un embouti 32.

La nervure 30 présente une profondeur P comprise entre 7 mm et 11 mm, de préférence sensiblement égale à 9 mm.

La première partie 22 du plancher 14 possède alors une raideur accrue, de sorte qu'elle présente une déformation élastique inférieure à 2 %, seuil au-delà duquel se créent les cloques lors d'un choc arrière.

L'invention propose donc un plancher rigidifié en périphérie du puits de jauge carburant qui permette de limiter la détérioration du réservoir de carburant en cas de choc arrière, et d'éviter ainsi des risques d'incendie sur le véhicule et ses occupants.

## Revendications

1. Plancher (14) de véhicule automobile (12), du type comprenant une partie (22) munie d'un orifice d'accès (26) à un orifice d'ouverture d'un réservoir de carburant (18) disposé au-dessous du plancher (14), **caractérisé en ce qu'**il comporte en périphérie de l'orifice d'accès (26) une déformation locale (28) de rigidification de ladite partie (22).

2. Plancher (14) selon la revendication 1, **caractérisé en ce que** la déformation locale (28) comporte au moins une nervure (30) de forme adaptée pour rigidifier ladite partie (22).

3. Plancher (14) selon la revendication 2, **caractérisé en ce que** ladite nervure (30) s'étend sensiblement parallèlement à l'axe longitudinal (X) du véhicule (12).

4. Plancher (14) selon la revendication 2 ou 3, **caractérisé en ce qu'**il est réalisé à partir d'une tôle emboutie, ladite nervure (30) étant formée lors de l'emboutissage du plancher (14) par un contre-emboutissage.

5. Plancher (14) selon l'une quelconque des revendications 2 à 4, **caractérisé en ce que** ladite nervure (30) présente une profondeur (P) comprise entre 7 mm et 11 mm, de préférence sensiblement égale à 9 mm.

6. Véhicule automobile (12), **caractérisé en ce qu'**il comprend un plancher (14) selon l'une quelconque des revendications précédentes.

## Claims

1. Floor pan (14) of a motor vehicle (12), of the type comprising a part (22) equipped with an access orifice (26) providing access to an opening port of a fuel tank (18) which is arranged beneath the floor pan (14), **characterised in that** said floor pan comprises a local deformation (28) at the periphery of the access orifice (26) in order to stiffen said part (22).

2. Floor pan (14) according to claim 1, **characterised in that** the local deformation (28) comprises at least one rib (30) of a shape adapted to stiffen said part (22).

3. Floor pan (14) according to claim 2, **characterised in that** said rib (30) extends substantially parallel to the longitudinal axis (X) of the vehicle (12).

4. Floor pan (14) according to either claim 2 or claim 3, **characterised in that** it is produced from a sheet metal stamping, said rib (30) being formed by counter-stamping during the stamping of the floor pan (14).

5. Floor pan (14) according to any one of claims 2 to 4, **characterised in that** said rib (30) has a depth (P) between 7 mm and 11 mm, preferably substantially equal to 9 mm.

6. Motor vehicle (12), **characterised in that** it comprises a floor pan (14) according to any one of the preceding claims.

## Patentansprüche

1. Boden (14) eines Kraftfahrzeugs (12) des Typs, der einen Teil (22) umfasst, der mit einer Zugangsöffnung (26) zu einer Eingangsöffnung eines unter dem Boden (14) angeordneten Kraftstoffbehälters (18) ausgestattet ist, **dadurch gekennzeichnet, dass** er am Umfang der Zugangsöffnung (26) eine lokale Versteifungsverformung (28) des Teils (22) umfasst.

2. Boden (14) nach Anspruch 1, **dadurch gekennzeichnet, dass** die lokale Verformung (28) mindestens eine Rippe (30) mit angepasster Form zum Versteifen des Teils (22) umfasst.

3. Boden (14) nach Anspruch 2, **dadurch gekennzeichnet, dass** die Rippe (30) sich im Wesentlichen parallel zur Längsachse (X) des Fahrzeugs (12) erstreckt.

4. Boden (14) nach Anspruch 2 oder 3, **dadurch gekennzeichnet, dass** er aus einem Tiefziehblech ausgeführt ist, wobei die Rippe (30) während des Ziehvorgangs des Bodens (14) mittels gegenläufigem Ziehvorgang ausgebildet wird.

5. Boden (14) nach einem der Ansprüche 2 bis 4, **dadurch gekennzeichnet, dass** die Rippe (30) eine Tiefe (P) zwischen 7 mm und 11 mm aufweist und vorzugsweise im Wesentlichen gleich 9 mm ist.

6. Kraftfahrzeug (12), **dadurch gekennzeichnet, dass** es einen Boden (14) gemäß einem der vorhergehenden Ansprüche aufweist.
